# EUROPEAN PATENT APPLICATION

(11) **EP 2 410 770 A1**
(43) Date of publication of application: **25.01.2012**
(21) Application number: 10753072.7
(22) Date of filing: 17.03.2010
(51) Int. Cl.: H04W 4/00

(54) **METHOD, USER NODE AND SERVER FOR REQUESTING POSITION INFORMATION OF RESOURCE ON NETWORK**

(30) Priority: 17.03.2009 CN 200910128935
(71) Applicant: NEC (China) Co., Ltd., Beijing 100191 (CN)
(72) Inventor: LIU, Yongqiang, Beijing 100084 (CN); XIA, Yong, Beijing 100084 (CN); HU, Yan, Beijing 100084 (CN); LUO, Yanlin, Beijing 100084 (CN)
(74) Representative: Vossius & Partner
(86) International application number: PCT/CN2010/000326
(87) International publication number: WO 2010/105505

(57) **Abstract**

Disclosed is a method for requesting for location information of resources on a P2P network, user node and server for the same, which allow a user to get network resources quickly. The popular files and the unpopular files are managed separately. The metadata of popular files are stored a plurality of SN based on respective areas, while the metadata of the unpopular files are stored and queried in a centralized manner. A function of redirecting a request message is added into the SN so as to inform the user the existence of a SN-R. Meanwhile, in order to improve query efficiency and avoid repeatedly redirecting of the message, a server routing table is provided for the user node which can indicate which files need to be download and which server should be requested to provide the files. Due to the popular filed and the unpopular filmed are stored separately and all of unpopular files are stored in a centralized manner, the user can get unpopular files when the user request for the unpopular files in a P2P network.

## Description

### Field of the Invention

The present application relates to the locating of network resources, particularly to a method of requesting for location information of resources in a P2P network, a user node and a server for the same, which facilitates users to get the desired resources quickly.

### Background of the Invention

A P2P network is a distributed network system consisting of interconnected machines which are able to self-organize for the purpose of sharing resources such as contents, CPU cycles, storage and bandwidth. A key problem to P2P network is data search, which means that when a user wants to download a fiile, how does it find which users have the file. An intuitional choice is to food a query throughout the whole network, but it causes long latency and much traffic cost. Therefore, the current P2P system typically uses indexing servers, which store data-peer information (which are also called as metadata such as description of attributes of files, such as size of file and the providers of the file and the like), to facilitate users to find quickly corresponding providers.

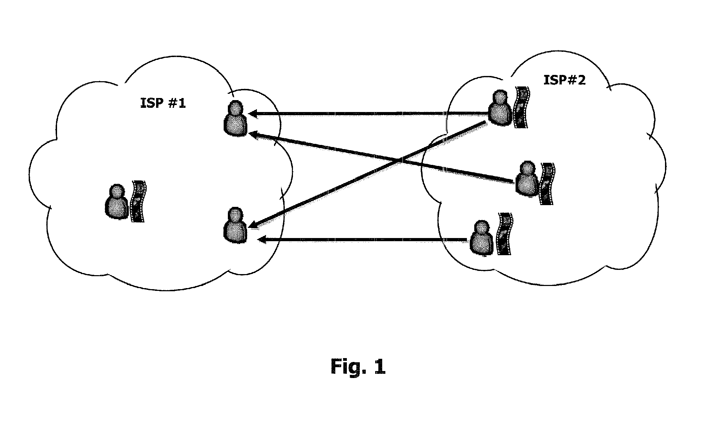

Most existing P2P indexing servers usually return a random subset from known user-set, which brings serious cross-ISP (Internet Service Provider) traffic problem to operators. As shown in Fig. 1, users in ISP#1 may download files from users in ISP#2, even if there are local copies in ISP#1. To cut cross-ISP traffic, new location-aware architecture is proposed for massive P2P systems.

In Non-patent Document 1 (A Manageable Carrier-Level P2P Network Architecture Drafit-GCSA TC1 WG4 Meeting, October 30, 2008), a method for distributed super-nodes was proposed, wherein metadata tables are stored into a plurality of servers which are called as super-nodes, and each of the servers takes charge of the storing and the querying of metadata in a respective area. The dividing of areas is flexible. An area can be an ISP For example, with regard to Internet in China, a super node can manage all of users and file information for China Telecommunication Corporation. If the amount of information to be managed is too huge, sub-nodes can be used, for example, one sub-node can take charge of the peers in the Beijing Telecommunication Branch and another sub-node can take charge of the peers in the Shanghai Telecommunication Branch, and the like.

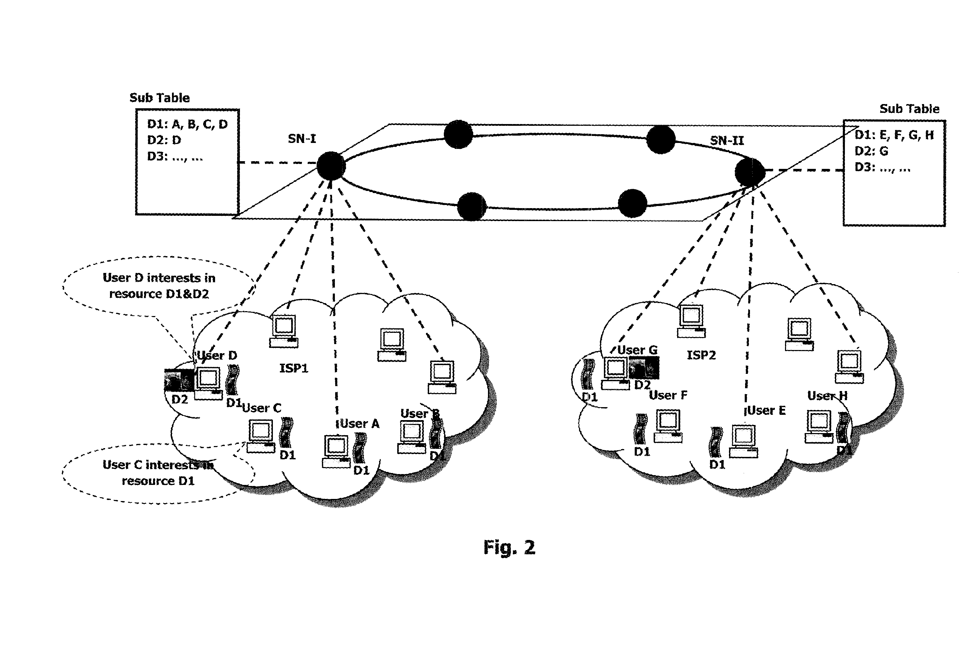

As shown in Fig.2, a super node I (Super Node I: SN-I) may take charge of peers in ISP1 and super node II (Super Node II: SN-II) may take charge of peers in ISP2. For example, during the storing, users A, B and C in ISP1 may report SN-I of the peers information such as file ID or address of the shared file D1, which is stored in the peers information table of SN-I in a format of "D1: A, B, C" (which indicates that users A, B and C have the file D1).

Similarly, users E, F, G and H in ISP2 may report SN-II of the peers information of the shared file D1. Meanwhile, user G may report the SN-II of the peers information of another file D2. As can be seen from Fig. 2, the file D1 can be considered as a popular file while the file D2 can be considered as unpopular file.

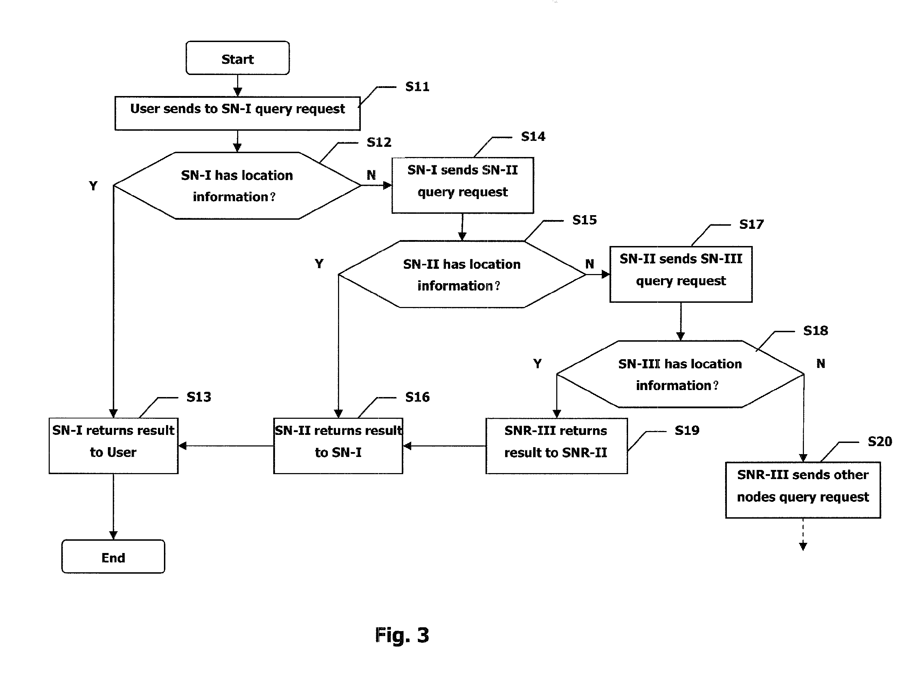

Fig. 3 shows a schematic process of requesting and searching metadata information in accordance with the existing technology. For the storing procedure as shown in Fig. 2, in step S11, when requesting for a file D1, the user D may send a request message to SN-I to get the file since the user D does not know whether the file D1 is a popular file or an unpopular file. In step S12, SN-I judges whether it has stored the location of the file D1 thereon. In the example, since the peers information table (Sub Table) of SN-I contains sufficient user information, in step S13, SN-I sends a response message to reply the request from the user D. Because users A, B, C and D are located in the same ISP, there is no cross-ISP traffic when the user D downloads the file D1. In addition, since the status of each peer is dynamic (on-line or not), the user D should periodically send to SN-I a request message to update the involved user information.

However, if what is requested by the user D is the file D2, in step S14, SN-I has to query the user information on other SNs, for example, to send a query request to SN-II, because SN-I does not has sufficient user information about the file D2. In step S15, SN-II judges whether it has stored the location information thereon. If SN-II has stored the locution information of the file D2 thereon, in step S16, SN-I1 returns the query results to SN-I, and then SN-I returns the same to the user D.

If the result of the judgment made at step S15 is negative, that is SN-II has not stored the location information (peer information) of the file D2 either, then SN-II for example sends a request message to SN-III in Step 17. Then, in step S18, SN-III judges whether it has stored the location information of the file D1 thereon. If the result of the judgment made at step S18 is positive, in step S19, SN-III returns the query results to SN-II and then SN-II returns the same to SN-I and the SN-I returns the same to the user D. If the result of the judgment made at step S18 is negative, then in step S20, SN-III has to send a request message to other SN and the like and the subsequent process is similar to the above described.

As can be seen from the above, the method is not extendible for the unpopular files, and it needs repeatedly querying a plurality of super nodes. This causes a significant delay in responding to the user quest at user side. Obviously, the response delay may degrade the performance of usage. For example, in a P2P VoD system, the user must wait for a long period before playing back a film if the demanded film is not so popular.

### Summary of the Invention

It is an object of the present invention to provide a method of requesting for location information of resources in a P2P network, a user node and a server for the same, which facilitates users to get the desired resources quickly.

In the first aspect of the present invention, it provides a method for requesting for location information of resources on a P2P network, wherein the P2P network comprises at least one first server each storing the location information of resources having a first popularity in respective domains and the storing addresses of the location information of the resource having a second popularity, and at least one second server each storing location information of resources having a second popularity, the method comprising steps of: sending from a user node to a first server in its domain a request for a resource; sending from the first server to the user node a message indicative of which second server stores the location information of the resource in case that the first server dose not store the location information of the resource; and sending from the user node to the second server a request for the location information based on the message.

In the second aspect of the present invention, it provides a method for uploading location information of resource in a P2P network, wherein the P2P network comprises at least one first server each storing the location information of resources having a first popularity in respective domains and the storing addresses of the location information of the resource having a second popularity, and at least one second server each storing location information of resources having second popularity, the method comprising: reporting, by a user node, a first server in its domain of the identification information of the resource and the address of the user node; storing the identification information of the resource and the address of the user node into the first server if the resource has the first popularity; sending from the first server to the user node a message indicative of which second server stores the location of the resource if the resource has the second popularity; and sending from the user node to the second server which is indicated by the message the identification information of the resource and the address of the user node.

In the third aspect of the present invention, it provides a user node for requesting for location information of resource in a P2P network, the P2P network comprises at least one first server each the location information of resources having a first popularity in respective domains and the storing addresses of the location information of the resource having a second popularity, and at least one second server each storing location information of resources having second popularity, the user node comprising: storing means for storing a table in which the requested location information is to be registered or registered, and querying means for sending to a first server in its domain a request for a resource in case that the request location information is not registered in the table, and in case that a message indicative of which one of the second server stores the location information is received, sending to the second server a request for the location information based on the message.

In the fourth aspect of the present invention, it provides a server in a P2P network, comprising: storing means for storing the location information of resources having a first popularity in respective domains and the storing addresses of the location information of the resource having a second popularity; query message processing means for receiving from a user node a request for the location information of the resource; and redirecting message creating means for, in case that the storing means does not store the location information, sending to the user node a message indicative of which location on the network the requested location information is stored to allow the user node acquire the location information from the location indicated by the message.

In the fifth aspect of the present invention, it provides a server in a P2P network, comprising: storing means for storing the location information of a resource; monitoring means for monitoring a change of the popularity of the resources on the network; and information transfer means for transferring the identification information and the location information of the resource to another node in case that the popularity of the resource is changed to another popularity that is larger than the popularity.

With the method and configuration described above, since popular files and the unpopular files are stored separately and all of unpopular files are stored in a centralized manner, user can get the desired files quickly even if the desired files are not so popular in a P2P network.

In addition, in accordance with the embodiments of the present invention, a user node is provided with a location information table. This further reduces the latency time during obtaining the network resources when the user requests for the involved resources once again.

In addition, in accordance with the embodiments of the present invention, because the location information can be transferred between different super nodes if the popularity of files is changed, the latency time during obtaining the desired files can be reduced further.

### Brief Description of the Drawings

Other objects, features and advantages of the present invention will be apparent by the detailed description of the preferred embodiments of the present invention with reference to the drawings, in which:
Fig. 1 is a schematic diagram illustrating the generation of cross-ISP traffic in the existing technology;
Fig. 2 shows a schematic diagram illustrating the management of peer information in the distributed super node in the existing technology;
Fig. 3 shows an illustrative flow chart describing the process of requesting and searching peer data between the distributed super node in the existing technology;
Fig. 4 shows an illustrative diagram of the configurations of a network in accordance with an embodiment of the present invention;
Fig. 5 shows a block diagram of user nodes and network servers in a network in accordance with an embodiment of the present invention;
Fig. 6 shows a flow chart describing the process of reporting the shared files in accordance with an embodiment of the present invention;
Fig. 7 shows a flow chart describing the process of requesting for location information of files in accordance with an embodiment of the present invention; and
Fig. 8 shows a block diagram of network server in a network in accordance with an embodiment of the present invention.

### Detailed Description of the Preferred Embodiments

The preferred embodiments of the present invention will be described in detail with reference to the drawings, wherein some details and functions unnecessary for the present invention will be omitted in order to avoid misunderstanding to the present invention.

In accordance with an embodiment of the present invention, popular fires and unpopular files are managed separately. The metadata of the popular files are stored in a plurality of SNs based on corresponding areas, while the metadata of the unpopular files are stored and searched in a centralized manner. The server (super node), which stores and searches unpopular files, is called SN-R.

Here, the popular files and the unpopular files involve relative concept. The skilled in the art may divide the files into more categories in accordance with the popular degree of the files.

In accordance with an embodiment of the present invention, two or more SN-Rs such as SN-R1 and SN-R2 can be used to store the unpopular files if the amount of the unpopular files is too huge. However, all metadata of one unpopular file should be stored in the same SN-R.

Because the user does not know the requested file is a popular one or an unpopular one when he requests location information of the file. In this case, the user may send a request message to SN which takes charge of the present ISP in default. To do so, a function of redirecting the message to inform the user of the existence of SN-R is provided for the SN. Meanwhile, in order to improve search efficiency and avoid any repeatedly redirecting of the message, a server routing table is provided for the user node to indicate which servers should be sent a request message when downloading the files. By using the routing table, the user who wants to download the popular file may send a request message to the SN in the same ISP as that of the user. If the user wants to download an unpopular file, he may send a request message to corresponding SN-R. By doing so, the process of searching unpopular files between different servers can be avoided and thus the response speed for searching the unpopular file can be reduced too. Meanwhile, the extendibility and the location-aware feature can be maintained for the popular files.

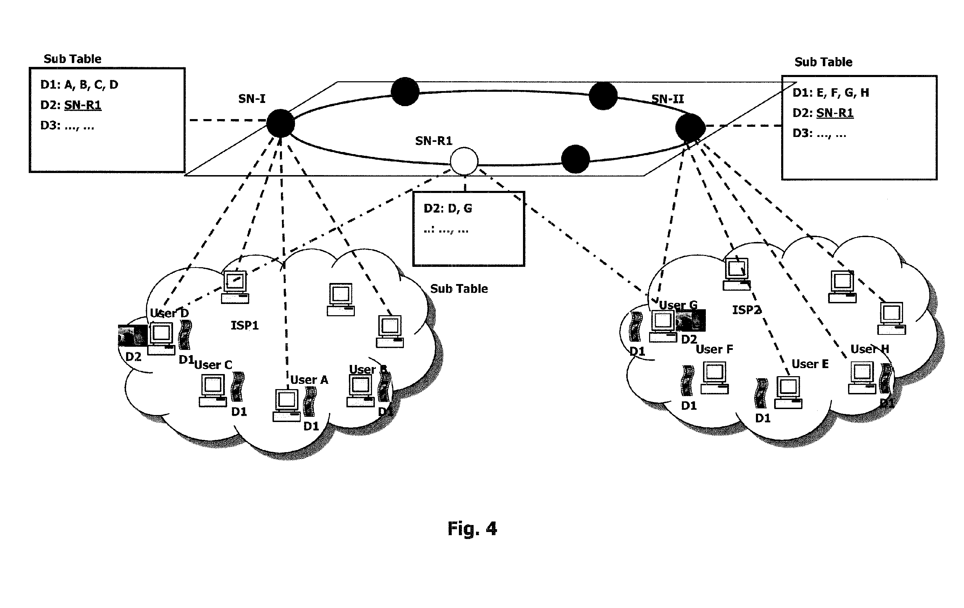

Fig. 4 shows an illustrative diagram of the configurations of a network in accordance with an embodiment of the present invention. As shown in Fig. 4, the provider information (G) of a file D2 is stored in SN-R1, and the node SN-R1 corresponding to the file D2 is shown in the metadata tables (sub tables) of SN-I and SN-II, When any user requests SN-I and SN-II for the file D2, SN-I and SN-II may inform the provider of file D2 of the request by a redirecting message. After received the redirecting message associated with the file D2, user D (provider) of file D2 may add an item into the SN-routing table to show the location information of the file D2. If the user requests for the file D2 again, the request can be sent to SN-R1 directly.

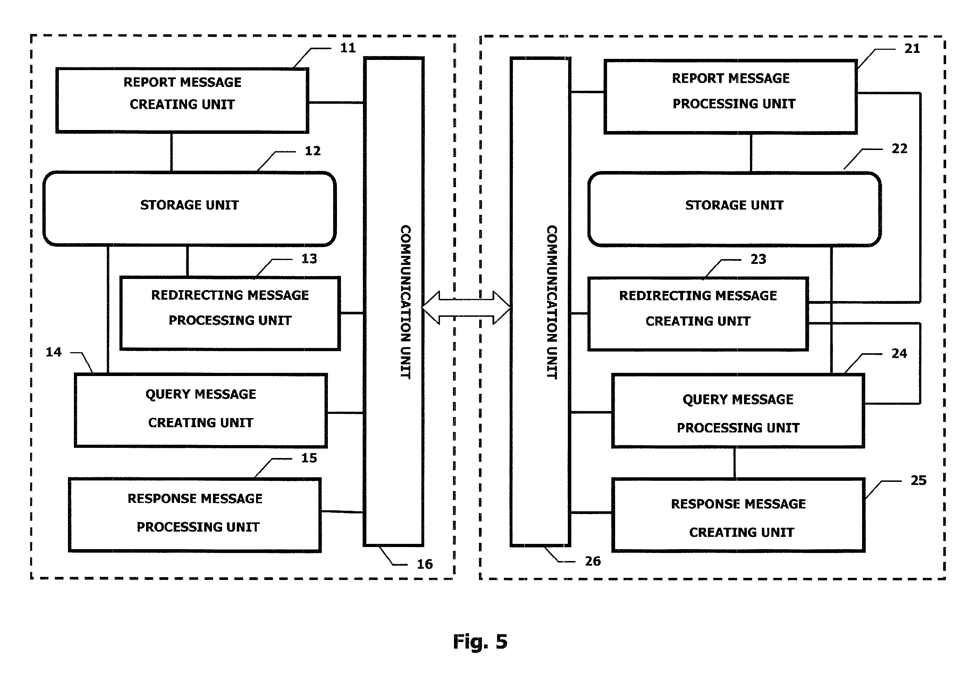

Fig. 5 shows a block diagram of user nodes and network servers in a network in accordance with an embodiment of the present invention. As shown in Fig. 5, the user node in accordance with the present embodiment includes a report message creating unit 11, a storage unit 12, a redirecting message processing unit 13, a query message creating unit 13, a response message creating unit 15 and a communication unit 16.

As shown in Fig. 5, the report message creating unit 11 composes a metadata report message when the user wants to share any files with others, and sends the message to a respective server SN through the communication unit 16. For example, the report message may include i) file information (DataID) of the file to be shared; and ii) the address of the user (provider) such as IP address, port number and protocols and the like.

The storage unit 12 contains a routing table in which the correspondence relationship between the files (which is identified by using DatalD) and the management server (which is identified by using address ID). Every time, before sending the report message by the report message creating unit 11 through the communication unit 16, it should search for any provider information about the file in the routing table, and then sends the message to the respective server (SN or SN-R).

The redirecting message processing unit 13 can receive a redirecting message from the network, such as the redirecting message transmitted from SN, and extract DatalD and information of the address of server and update the routing table stored in the storage unit 12.

The query message creating unit 14 composes a file request message and send the same to the server through the communication unit. For example, the request message may include i) DatalD of the file to be downloaded; and ii) the information of the address of the present user (the requester of the file); iii) the amount of the user information to be acquired (information about the provider of the file). Before sending the query message, the query message creating unit 14 may determine whether the address information of the requested file has been stored into the table stored in the storage unit 12 by comparing the DatalD with the items of the table. If not, the message will be sent to the SN in the present domain. Otherwise, the message will be sent to the determined address or the determined server.

The response message processing unit 15 may acquire a file request response message from a server, extract the user address information of the file from the message, and transfer the extracted information to the downloading unit (not shown). The downloading unit then downloads the file from the address of the user (provider) of the file.

As shown in Fig. 5, the SN in accordance with the embodiment of the present invention may include a report message processing unit 21, a storage unit 22, a redirecting message creating unit 23, a query message processing unit 24, a response message creating unit 25 and a communication unit 26. Because SN and SN-R have the same configurations, the following descriptions can be applied to SN and SN-R.

As shown in Fig. 5, the report message processing unit 21 may obtain the metadata report message from a user through the communication unit 26, extract DatalD and user addresses, and search for user information in the storage unit 22 by using DatalD. If the search result is the SN-R, the redirecting message creating unit 23 may composes a redirecting message which can indicate the user which super nodes (for example which SN-Rs) have stored the location information of the requested file. Otherwise, the report message processing unit 21 adds a new item into the storage unit 22.

As described above, the storage unit 22 contains a metadata table in which the correspondence information between each file (which is identified by using DatalD) and the user information (which is identified by using addresses) or SN-Rs are stored.

The redirecting message creating unit 23 can compose a redirecting message and send the same to the respective requester. The composed message may include i) DatalD and ii) the address of SN-R.

The query message processing unit 24 can acquire a file request message from a user through the communication unit 26 and conduct a search in the metadata table stored in the storage unit 22. If the search result is the user information, the information of the users which are T closest users to the requester is selected and transferred to the response message creating unit 25. If the search result is SN-R information, the redirecting message creating unit 23 can compose a redirecting message.

The response message creating unit 25 may compose a response message and send the same to the requester. For example, the response message may include i) DatalD; and ii) the table of address of the file providers.

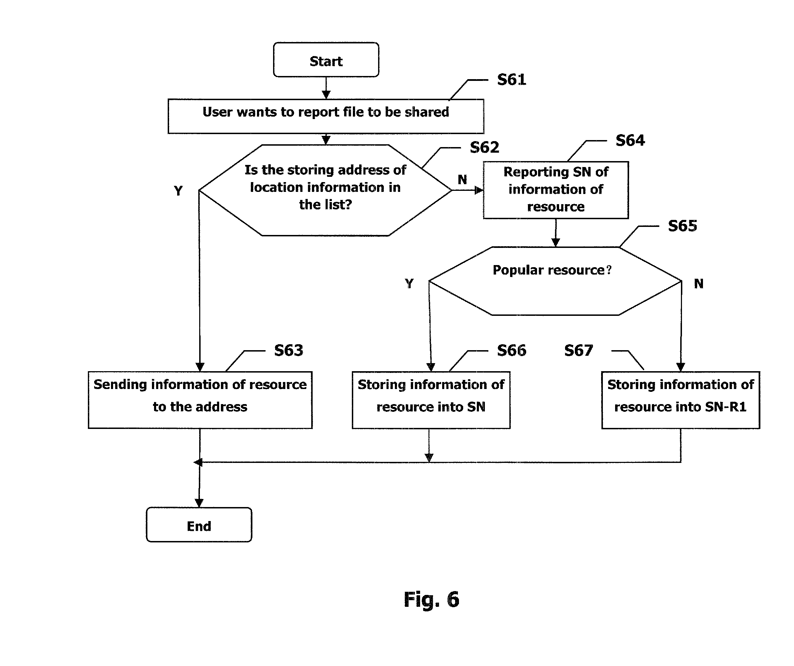

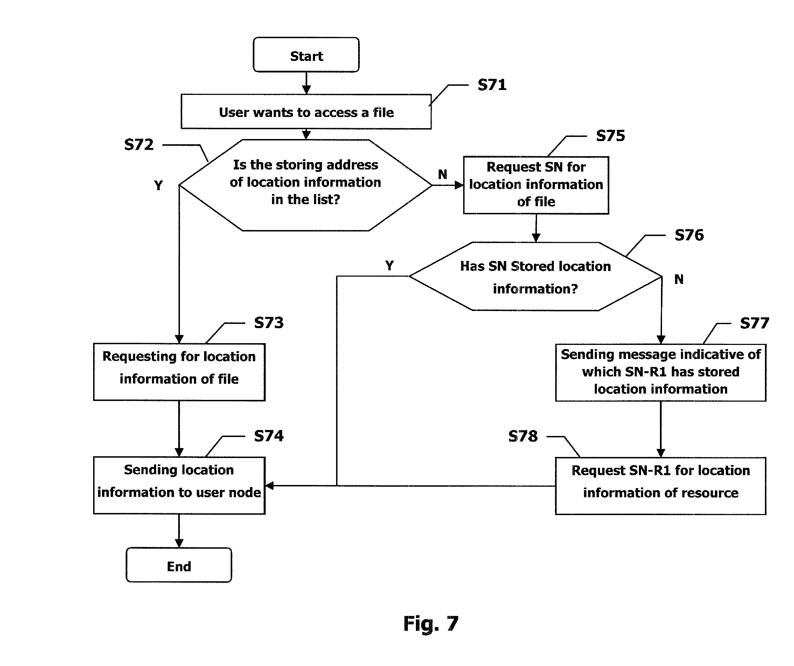

The detailed configurations and process of the user node and the server in accordance with the embodiment of the present invention will be described with reference to Figs. 6 and 7. Fig. 6 shows a flow chart describing the process of reporting the shared files in accordance with an embodiment of the present invention.

As shown in Fig. 6, in step 61, if a user wants to share any resources such as a video file with other users, then in step S62, a report message creating unit 11 may conduct a search in the server routing table stored in the storage unit 11 to determine whether the ID of the file and the location information of the file have been stored in the table.

if the result of the determination made at step S62 is positive, then in step S63, the report message creating unit 11 may send to the determined user the ID of the file to be shared and the address of the user such as IP address, port number and protocols and the like.

If the result of the determination made at step S62 is negative, then in step S64, the report message creating unit 11 may send the ID of the file and the address of the user (provider) to the SN in the same domain as that of the user via the report message.

In step S65, after received the report message, the report message processing unit 21 of the SN in the present domain may judge whether the file to be shared is a popular file or an unpopular file. If the file to be shared is a popular file, then in step S66, the information about the file may be stored in the storage unit of the SN. If the file to be shared is an unpopular file, then in step S67 the information about the file may be stored in the storage unit of the SN-R1.

Fig. 7 shows a flow chart describing the process of requesting for location information of files in accordance with an embodiment of the present invention. As shown in Fig. 7, in step S71, when a user node wants to query a resource such as a video file. In step S72, the query message creating unit 14 of the user node may firstly determine whether the ID of the resource and the mane of the server which stores the location information of the resource have been stored into the server routing table stored in the storage unit 12.

If the result of the determination made at step S72 is positive, then in Step 73, the query message creating unit 14 may compose a query message, and request the determined server for the location information of the resource, and then in step S74, the server may send the location information of the resource to the user node.

If the result of the determination made at step S72 is negative, then in step S75 the query message creating unit 14 of the user node may send to the SN in the same domain a message to request for the location information of the resource. Then in step S76, the query message processing unit 24 in the SN may conduct a search in the user information table stored in the storage unit 22 to determine whether the location information of the file has been stored in the stable, If it has been stored in the table, then in step S74, the response message creating unit 25 may send the location information of the file to the user node through the communication unit 26. if it has not been stored in the table and the table only shows that the location information is stored in the SN-R1, then in step S77, the redirecting message creating unit 24 in the SN may create a redirecting message indicative of the location information has been stored in the SN-R1, and then send the same to the user node through the communication unit 26.

Then, in step S78, after received the redirecting message, the redirecting message processing unit 13 in the user node may refresh the table stored in the storage unit 12, and the query message creating unit 14 may send the query message to the SN-R1.

Then, in step S74, SN-R1 may return to the user node the location of the resource.

Thus, in accordance with an embodiment of the present invention, during querying a popular file (for example D1 shown in Fig. 4), the user (for example user D) may request the server (SN-I shown in Fig. 4) in the same domain for the file, and the server may return to the user the provider information of the file directly. For unpopular files (D2 in Fig. 4), the first request from the user is sent to the server (SN-I) in the present domain. SN-I queries its metadata routing table, and finds that an item corresponding to the file D2 is an address of SN-R1. Then SN-I sends a redirect message to user D. After received the message, the user D modifies the local server routing table, and sends a request to SN-R1. Because all of user information about D2 is stored into SN-R1, SN-R1 makes a response to the request from user D. By checking server routing table, any future requests from user D can be sent to SN-R1 directly. By doing so, querying on a number of servers repeatedly can be avoided. Thus the response time for a request can be shortened significantly.

In accordance with an embodiment of the present invention, the popularity of a file depends on its content. However, under some specific cases, the popularity of a file may be changed over time. For example, most of users in a P2P network may be off-line in the night, and the user information of the popular files which is stored in each SN may be changed less, for example changed into an unpopular file. Under such a case, if the user information can be stored in the same SN-R, the performance of the system could be improved. Therefore, it needs to transfer the location information of the files whose popularities has been changed between SN and SN-R.

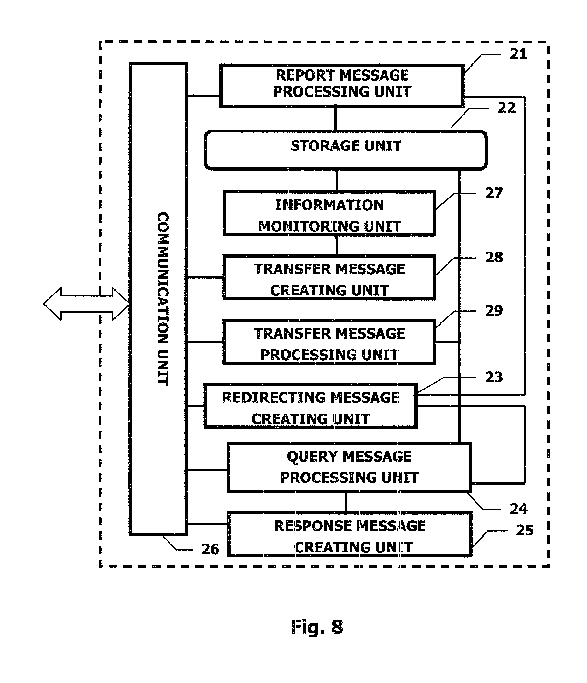

Fig. 8 shows a block diagram of network server in a network in accordance with an embodiment of the present invention. As shown in Fig. 8, except for the same units as shown in Fig. 5, the super node in accordance with an embodiment of the present invention is further provided with an information monitoring unit 27, a transfer message creating unit 28 and a transfer message processing unit 29. In accordance with the embodiment, the SN as described above is provided with an information monitoring unit 27 for monitoring the popularity of files (for example the number of accessing the file at a predetermined period), a transfer message creating unit 28 for transferring the location information of files and a transfer message processing unit 29 for processing the transfer message sent from other SNs. If a file is changed from popular to unpopular, then the transfer message creating unit 29 may transfer the user information stored in the local metadata table in the storage unit 22 to the corresponding SN-R, and set the address of the SUN-R into the local metadata table. By doing so, if a user wants to request the file again, the redirecting message creating unit 23 of SN may create a redirecting message and inform the user of the same, and vice versa.

As shown in Fig. 8, the information monitoring unit 27 may monitor the change of the popularity of files. In accordance with an embodiment of the present invention, the determination whether the popularity of a file is changed or not is described as follows. If at SN the number of users accessing the file or the number of users possessing the file is less than a predetermined threshold value in a prescribed period, it may determine that the file has changed as an unpopular one. If at SN-R the number of users accessing the file or the number of users possessing the file is larger than a predetermined threshold value in a prescribed period, it may determine that the file has changed as a popular one.

The transfer message creating unit 28 may compose a transfer message and send to the SN-R the same. In accordance with an embodiment of the present invention, the selection of the SN-R is dependent on the hashed value of the DatalD of the file. For example, the hash algorithm can be Consistent Hash. For n unpopular files and k SN-Rs, the algorithm can ensure each SN-R can treat n/k files so as to balance the loads for the SN-Rs. The component in the SN-R may send the message to all of SNs whose names have stored in the buffering unit (not shown).

The transfer message processing unit 29 may acquire a transfer message from the network, extract the location information of the resource to be transferred, and insert them to the local metadata table in the storage unit 22. Meanwhile, the components in the SN-R may buffer the address of the SN.

The above description is just details of preferred embodiments. However, the present invention is not limited to this, but encompasses variations and substitutions that can be envisaged by those skilled in the art within the disclosure of the present invention. Therefore, the scope of the present invention is defined by the appended claims.

## Claims

1. A method for requesting for location information of resources on a P2P network, wherein the P2P network comprises at least one first server each storing the location information of resources having a first popularity in respective domains and the storing addresses of the location information of the resource having a second popularity, and at least one second server each storing location information of resources having a second popularity, the method comprising steps of:
sending from a user node to a first server in its domain a request for a resource;
sending from the first server to the user node a message indicative of which second server stores the location information of the resource in case that the first server dose not store the location information of the resource; and
sending from the user node to the second server a request for the location information based on the message.

2. The method as claimed in claim 1, wherein the user node comprising a table in which addresses of sever having the requested location information is to be registered or registered, the method further comprises:
determining whether the storing addresses of the location information of the resource has been registered in the table or not;
wherein in case that the storing addresses of the location information of the resource is not registered in the table, the user sends to the first server a request for the location information of the resource.

3. The method as claimed in claim 2, further comprises a step of:
updating the table based on the message received from the first server.

4. The method as claimed in claim 1, wherein the second popularity is lower than the first popularity, and the method further comprises the steps of:
sending from the first server to the second server the identification information and location information of the resource in case that the popularity of the resource is changed from the first popularity to the second popularity; and/or
sending from the second server to the first server the identification information and location information of the resource in case that the popularity of the resource is changed from the second popularity to the first popularity.

5. The method as claimed in claim 4, wherein
if the access amount of the resource or the amount of the users who possess the resource is lower than a specific threshold in a predetermined period, the popularity of the resource is the second popularity; and
if the access amount of the resource or the amount of the users who possess the resource is equal to or larger than the specific threshold in a predetermined period, the popularity of the resource is the first popularity.

6. The method as claimed in claim 4, further comprising a step of sending the identification information and the location information of different resources respective second servers to balance the loads of the second servers.

7. A method for uploading location information of resource in a P2P network, wherein the P2P network comprises at least one first server each storing the location information of resources having a first popularity in respective domains and the storing addresses of the location information of the resource having a second popularity, and at least one second server each storing location information of resources having second popularity, the method comprising:
reporting, by a user node, a first server in its domain of the identification information of the resource and the address of the user node;
storing the identification information of the resource and the address of the user node into the first server if the resource has the first popularity;
sending from the first server to the user node a message indicative of which second server stores the location of the resource if the resource has the second popularity; and
sending from the user node to the second server which is indicated by the message the identification information of the resource and the address of the user node.

8. The method as claimed in claim 7, wherein the second popularity is lower than the first popularity,
if the access amount of the resource or the amount of the users who possess the resource is lower than a specific threshold in a predetermined period, the popularity of the resource is the second popularity; and
if the access amount of the resource or the amount of the users who possess the resource is equal to or larger than the specific threshold in a predetermined period, the popularity of the resource is the first popularity.

9. The method as claimed in claim 7, further comprising a step of sending the identification information and the location information of the resource to one of the at least one second server to balance the loads of the second server.

10. A user node for requesting for location information of resource in a P2P network, the P2P network comprises at least one first server each the location information of resources having a first popularity in respective domains and the storing addresses of the location information of the resource having a second popularity, and at least one second server each storing location information of resources having second popularity, the user node comprising:
storing means for storing a table in which the requested location information is to be registered or registered, and
querying means for sending to a first server in its domain a request for a resource in case that the request location information is not registered in the table, and in case that a message indicative of which one of the second server stores the location information is received, sending to the second server a request for the location information based on the message.

11. The user node as claimed in claim 10, further comprising means for updating the table based on the message sent from the first server.

12. The user node as claimed in claim 10, wherein the second popularity is lower than the first popularity, and the user node further comprises:
reporting means for reporting the first server in its domain the identification information of the resource to be shared and the address of the user node, and in the case that a message indicative of which one of the second server should stores the identification information and the address is received, sending to the second server the identification information of the resource and the address of the user node.

13. A server in a P2P network, comprising:
storing means for storing the location information of resources having a first popularity in respective domains and the storing addresses of the location information of the resource having a second popularity;
query message processing means for receiving from a user node a request for the location information of the resource; and
redirecting message creating means for, in case that the storing means does not store the location information, sending to the user node a message indicative of which location on the network the requested location information is stored to allow the user node acquire the location information from the location indicated by the message.

14. The server as claimed in claim 13, further comprising:
report processing means for receiving from the user node the identification information of the resource to be shared and the address of the user node;
wherein the second popularity is lower than the first popularity;
if the resource has a first popularity, the report processing means is adapted to store the identification information of the resource and the address of the user node into the storing means;
if the resource has a second popularity, the redirecting message creating means sends to the user node a message indicative of which location the resource should be stored to allow the user node to acquire the location information from the location indicated by the message.

15. The server as maimed in claim 14, further comprising:
popularity monitoring means for monitoring a change of the popularity of the resources on the network; and
information transfer means for transferring the identification information and the location information of the resource to another node in case that the popularity of the resource is changed from the first popularity to the second popularity.

16. The server as claimed in claim 15, wherein
if the access amount of the resource or the amount of the users who possess the resource is lower than a specific threshold in a predetermined period, the popularity of the resource is the second popularity; and
if the access amount of the resource or the amount of the users who possess the resource is equal to or larger than the specific threshold in a predetermined period, the popularity of the resource is the first popularity.

17. The server as claimed in clam 15, wherein the information transfer means is adapted to send the identification information and the location information of the resource to one of other nodes to balance the loads of other node.

18. A server in a P2P network, comprising:
storing means for storing the location information of a resource;
monitoring means for monitoring a change of the popularity of the resources on the network; and
information transfer means for transferring the identification information and the location information of the resource to another node in case that the popularity of the resource is changed to another popularity that is larger than the popularity.
